# DEMANDE DE BREVET EUROPEEN

(11) **EP 0 875 867 A1**
(43) Date de publication de la demande: **04.11.1998**
(21) Numéro de dépôt: 97107156.8
(22) Date de dépôt: 30.04.1997
(51) Int. Cl.: G07F 1/00, G07F 17/10, G07B 15/02

(54) **Système automatisé de stockage de cycles, en particulier des bicyclettes**

(71) Demandeur: More Group Belgium S.A., 1210 Bruxelles (BE)
(72) Inventeur: Rey, Pascal, 1050 Bruxelles (BE)
(74) Mandataire: Casalonga, Axel

(57) **Abrégé**

Le système automatisé de stockage de cycles comprend :
une pluralité de cycles (CY) comportant chacun une zone d'accrochage (ZA) pour son stockage temporaire, un moyen d'identification (P1, P2) contenant un identifiant associé de façon biunivoque audit cycle, et un antivol (AV) solidaire du cycle et agencé de façon à prévenir le vol du cycle lors d'une utilisation temporaire du cycle par un utilisateur, cet antivol étant actionnable à l'aide d'une clé amovible (CL) contenant au moins une partie du moyen d'identification (P1), et
au moins une station de stockage (ST) comprenant plusieurs emplacements de stockage (EMP) aptes chacun à recevoir de façon amovible un cycle, plusieurs dispositifs commandables de verrouillage/déverrouillage automatique de cycles (CRH) aptes chacun à coopérer avec ladite zone d'accrochage d'un cycle, et des dispositifs de lecture (LP1, LP2) aptes à lire les moyens d'identification des cycles reçus dans les emplacements de stockage.

## Description

L'invention concerne le stockage automatique de cycles.

Un cycle s'entend ici comme étant tout véhicule à deux, ou éventuellement trois roues, mû par la pression des pieds ou par un moteur.

L'invention s'applique avantageusement, mais non limitativement, au stockage de bicyclettes destinées à être mises à la disposition d'utilisateurs pour un usage temporaire, en particulier pour leurs loisirs.

Un but de l'invention est de proposer un système automatisé de stockage de cycles nécessitant un personnel restreint pour assurer son fonctionnement et sa gestion, tout en réduisant les risques de fraude, de vol et de vandalisme.

L'invention a également pour but de réaliser, avec des moyens techniques simples et à un coût industriellement raisonnable, un suivi et une identification automatiques des cycles empruntés et des utilisateurs correspondants, tout en offrant la possibilité à un utilisateur de restituer éventuellement sa bicyclette à un endroit différent de celui où il l'avait empruntée.

Telle que revendiquée, l'invention propose donc un système automatisé de stockage de cycles comprenant une pluralité de cycles comportant chacun une zone d'accrochage pour son stockage temporaire, un moyen d'identification contenant un identifiant associé de façon biunivoque audit cycle, et un antivol solidaire du cycle agencé de façon à prévenir le vol du cycle lors d'une utilisation temporaire du cycle par l'utilisateur. Cet antivol est actionnable à l'aide d'une clef amovible contenant au moins une partie du moyen d'identification. Le système comprend en outre au moins une station de stockage comprenant plusieurs emplacements de stockage aptes chacun à recevoir de façon amovible un cycle. La station de stockage comprend également plusieurs dispositifs commandables de verrouillage/déverrouillage automatiques de cycles aptes chacun à coopérer avec ladite zone d'accrochage d'un cycle, et des dispositifs de lecture aptes à lire les moyens d'identification des cycles reçus dans les emplacements de stockage.

L'antivol ainsi agencé sur le cycle, et actionnable par une clef amovible, permet, par exemple en solidarisant le cycle à un poteau lors de son utilisation temporaire, de prévenir le vol de ce cycle par un tiers autre que l'utilisateur. En outre, le fait de loger dans la clef de l'antivol au moins une partie du moyen d'identification assure au gestionnaire du système automatisé de stockage que l'utilisateur a bien restitué son cycle équipé de l'antivol et de sa clef. On évite ainsi notamment, dans le cas où la clef ne contiendrait aucune partie du moyen d'identification, qu'un utilisateur malveillant restitue son cycle après avoir effectué un double de la clef de l'antivol pour pouvoir ensuite le dérober éventuellement lors d'une utilisation ultérieure par un autre utilisateur.

L'invention est donc notamment remarquable en ce sens qu'un même moyen, à savoir la clef de l'antivol, assure à la fois une fonction d'identification du cycle et une fonction de verrouillage et de déverrouillage mécanique de l'antivol.

Dans une version très simplifiée du système selon l'invention, les dispositifs de verrouillage/déverrouillage automatiques des cycles peuvent être par exemple commandés, en ce qui concerne le déverrouillage, manuellement par l'utilisateur par l'insertion d'un jeton ou analogue, ou bien à distance, par exemple par ondes radio, par une personne habilitée auprès de laquelle l'utilisateur potentiel du cycle s'est fait connaître. En ce qui concerne le verrouillage du cycle, celui-ci peut s'effectuer automatiquement lorsque la zone d'accrochage du cycle vient au voisinage immédiat du dispositif de verrouillage. Mieux, on peut prévoir des moyens de contrôle, reliés aux dispositifs de lecture des moyens d'identification des cycles, aptes à délivrer un signal de commande de verrouillage du cycle après lecture et contrôle du moyen d'identification du cycle.

Selon une variante encore plus améliorée de l'invention, le système comprend une pluralité d'objets portatifs, par exemple des cartes à mémoire, destinées à être affectées à des utilisateurs potentiels des cycles, chaque objet portatif contenant des informations d'identification permettant au moins d'identifier l'objet portatif. Il peut s'agir simplement d'un identifiant de carte logée dans la mémoire de la carte à mémoire. On peut également avantageusement prévoir que les informations d'identification comprennent un identifiant-utilisateur et une information de validité de la carte. Les dispositifs de verrouillage/déverrouillage sont alors aptes chacun à verrouiller un cycle à son emplacement de stockage et à déverrouiller un cycle en réponse à des signaux de commande de verrouillage et de déverrouillage. La station comprend en outre des moyens d'interface, par exemple des lecteurs de cartes à mémoires, aptes chacun à coopérer avec un objet portatif. Le système selon l'invention comprend alors avantageusement des moyens de contrôle reliés aux dispositifs de lecture, aux dispositifs de verrouillage/déverrouillage et aux moyens d'interface. Ces moyens de contrôle sont aptes en présence d'un objet portatif coopérant avec un moyen d'interface, à contrôler les informations d'identification de l'objet portatif ainsi que l'identifiant du cycle de façon à éventuellement délivrer le signal de commande de déverrouillage correspondant. Ces mêmes moyens de contrôle sont par ailleurs aptes, lors de la restitution d'un cycle à un emplacement de stockage, à contrôler au moins l'identifiant du cycle de façon à éventuellement délivrer le signal de commande de verrouillage.

Le fait d'affecter des objets portatifs tels que des cartes à mémoires à des utilisateurs potentiels des cycles, permet grâce notamment aux informations d'identification contenues dans l'objet portatif, un meilleur suivi des attributions de cycles. En outre, le fait de conditionner le signal de commande de déverrouillage au contrôle des informations d'identification de l'objet portatif et de l'identifiant du cycle, permet de mieux contrôler les utilisateurs autorisés à emprunter un cycle. De même, le fait de conditionner la délivrance du signal de commande de verrouillage lors de la restitution d'un cycle, au contrôle préalable au moins de l'identifiant du cycle, permet de s'assurer que celui-ci a bien été restitué avant de dégager la responsabilité de l'utilisateur.

Afin notamment de s'assurer que l'utilisateur qui restitue un cycle est bien celui qui l'a emprunté, il est particulièrement avantageux de prévoir également une coopération entre l'objet portatif de l'utilisateur et le dispositif de lecture associé à l'emplacement de stockage dans lequel l'utilisateur restitue son cycle, et de conditionner la délivrance par les moyens de contrôle du signal de commande de verrouillage après vérification non seulement de l'identifiant du cycle, mais également des informations d'identification de l'objet portatif.

Selon une autre variante de l'invention, le système automatisé de stockage de cycles comprend une pluralité de cycles comportant chacun :
un moyen d'identification contenant un identifiant associé de façon biunivoque au cycle,
une pluralité d'objets portatifs destinés à être affectés à des utilisateurs potentiels des cycles, et contenant chacun des informations d'identification permettant au moins d'identifier ledit objet portatif,
au moins une station de stockage comportant plusieurs emplacements de stockage aptes chacun à recevoir de façon amovible un cycle, des dispositifs de lecture des moyens d'identification des cycles reçus dans les emplacements de stockage, des dispositifs de verrouillage/déverrouillage automatiques aptes chacun à verrouiller un cycle à son emplacement de stockage et à déverrouiller un cycle en réponse à des signaux de commande de verrouillage et de déverrouillage, et des moyens d'interface aptes chacun à coopérer avec un objet portatif, et
des moyens de contrôle reliés aux dispositifs de lecture, aux dispositifs de verrouillage/déverrouillage et aux moyens d'interface, et aptes en présence d'un objet portatif coopérant avec un moyen d'interface, à contrôler les informations d'identification de l'objet portatif et l'identifiant du cycle de façon à éventuellement délivrer le signal de commande de déverrouillage correspondant, et en cas de délivrance du signal de commande de déverrouillage, à inhiber la délivrance d'un signal de commande de déverrouillage ultérieur associé à ce même objet portatif tant que le cycle utilisé n'est pas de nouveau reçu dans un emplacement de stockage, ces moyens de contrôle étant par ailleurs aptes, lors de la restitution d'un cycle à un emplacement de stockage, à contrôler au moins l'identifiant du cycle, à délivrer le signal de commande de verrouillage et à lever l'inhibition de délivrance d'un signal de commande de déverrouillage associé à cet objet portatif.

Cette variante de l'invention permet donc de réaliser une relation biunivoque entre un objet portatif et un cycle, uniquement à partir du moment où le cycle a été déverrouillé en utilisant l'objet portatif. En d'autres termes, préalablement au déverrouillage d'un cycle, tout objet portatif permet de pouvoir utiliser n'importe quel cycle. De même, cette possibilité de pouvoir utiliser n'importe quel cycle à partir de n'importe quel objet portatif, est à nouveau offerte à partir de l'instant où le cycle ayant été utilisé avec un objet portatif spécifique a été restitué.

L'invention est donc remarquable en ce sens qu'elle évite notamment l'utilisation d'objets portatifs, tels que des cartes à mémoires, spécifiquement dédiés a priori à des cycles particuliers.

L'invention permet donc une très grande simplification des moyens techniques, permettant de réaliser à chaque utilisation d'un cycle une relation biunivoque entre ce cycle et un objet portatif. A titre indicatif, cette relation biunivoque peut être créée au sein d'une mémoire des moyens de contrôle, ce qui permet en particulier d'utiliser des cartes à mémoires dont le circuit intégré (puce) ne contient qu'un ou plusieurs registres mémoires et est exempt de microprocesseur incorporant un logiciel spécifique permettant de créer au sein de la carte une telle relation biunivoque.

Ceci étant, et quelle que soit la variante de l'invention, il n'est pas exclu que les moyens de contrôle puissent être au moins en partie incorporés dans les objets portatifs.

Selon un mode de réalisation avantageux de l'invention, les moyens de contrôle comportent une mémoire centrale contenant tous les identifiants de cycles, toutes les informations d'identification des objets portatifs. Les moyens de contrôle comportent alors des moyens de traitement aptes à élaborer une table de correspondance entre chaque identifiant de cycle déverrouillé et les informations d'identification de l'objet portatif ayant permis le déverrouillage. Les moyens de traitement sont alors aptes à inhiber la délivrance d'un signal de commande de déverrouillage ultérieur associé à ce même objet portatif tant que les informations d'identification de cet objet portatif figurent dans ladite table de correspondance. Ces moyens de contrôle sont aptes à lever ladite inhibition de délivrance d'un signal de commande de déverrouillage associé à cet objet portatif en retirant de la table de correspondance les informations d'identification de cet objet portatif.

La combinaison d'une inhibition de la délivrance d'un signal de commande de déverrouillage ultérieur associé à un objet portatif, avec la caractéristique d'une clef d'antivol contenant au moins une partie du moyen d'identification du cycle, permet une identification et un suivi sécuritaire des cycles empruntés avec un maximum de garanties contre la fraude et le vol.

Les moyens de traitement sont avantageusement aptes en outre à inhiber la délivrance d'un signal de commande de déverrouillage en présence d'une condition supplémentaire autre que celle liée au contenu de ladite table de correspondance. En effet, dans certains cas précis, une bicyclette ne pourra pas être libérée de la station de stockage, bien que l'objet portatif, par exemple la carte à mémoire, autorise une telle libération. Ainsi, les moyens de contrôle peuvent par exemple bloquer la bicyclette à son emplacement de stockage, en particulier par télécommande, pour des raisons d'entretien, comme par exemple le changement d'une chaîne. De même, une bicyclette peut être bloquée à cause d'une réservation (par exemple téléphonique ou au moyen du réseau Internet) par un utilisateur. Il est encore possible d'inhiber le signal de commande de déverrouillage associé à un objet portatif si celui-ci a été par exemple déclaré volé.

Lorsque le cycle est stocké à un emplacement de stockage, le moyen d'identification de chaque cycle est de préférence disposé au moins partiellement dans un logement inaccessible à un utilisateur. Ceci permet, notamment lorsque la clef de l'antivol comporte au moins une partie du moyen d'identification, de minimiser encore les tentatives de fraude lorsque le cycle est stocké à son emplacement.

Ainsi, selon un mode de réalisation de l'invention, la station de stockage comporte des boîtiers respectivement associés aux emplacements de stockage, chaque boîtier incorporant un logement inaccessible à un utilisateur, apte à recevoir au moins partiellement le moyen d'identification d'un cycle, un dispositif de lecture du moyen d'identification du cycle, un moyen de verrouillage/déverrouillage, et, lorsque l'invention le prévoit, un moyen d'interface avec un objet portatif. On regroupe ainsi au sein d'un même boîtier, ce qui facilite donc la réalisation technique, d'une part les fonctions de lecture du moyen d'identification, les fonctions de verrouillage/déverrouillage, éventuellement les fonctions de coopération avec l'objet portatif, et, d'autre part, le logement inaccessible à l'utilisateur.

Lorsque chaque objet portatif est une carte à mémoire, par exemple une carte à puce, le moyen d'interface comporte alors un lecteur classique de carte à mémoire.

Bien que le moyen d'identification d'un cycle puisse être intégralement situé au niveau de la clef de l'antivol, il est préférable que le moyen d'identification d'un cycle comporte deux éléments distincts, respectivement disposés à deux endroits distincts du cycle, chaque élément contenant au moins une partie de l'identifiant du cycle.

Un tel mode de réalisation permet de minimiser encore les risques de fraude. En effet, notamment lorsque le deuxième élément du moyen d'identification est logé dans le cadre du cycle, on s'assure ainsi, lorsque le cycle est restitué à son emplacement du stockage et que l'identifiant du cycle est contrôlé à partir du contenu des deux éléments distincts, que non seulement l'antivol est restitué, mais que le reste du cycle est également restitué. Un tel mode de réalisation permet d'éviter, dans le cas où le cycle ne comporterait qu'un moyen d'identification intégralement logé dans la clef de l'antivol, qu'un utilisateur malveillant retire la clef de l'antivol, conserve le cycle, et présente uniquement la clef devant le dispositif de lecture correspondant de façon à simuler la restitution du cycle.

De façon à simplifier la réalisation mécanique de l'invention, les deux éléments distincts du moyen d'identification d'un cycle sont disposés sur le cycle de façon à être reçus tous les deux dans le logement inaccessible du boîtier. On placera ainsi avantageusement les deux éléments distincts du moyen d'identification au voisinage l'un de l'autre. Bien entendu, le dispositif de lecture du boîtier comporte alors deux moyens de lecture aptes à coopérer respectivement avec les deux éléments distincts du moyen d'identification.

Bien entendu, lorsque le moyen d'identification d'un cycle est intégralement formé d'un seul élément, par exemple logé dans la clef de l'antivol, l'identifiant du cycle est intégralement contenu dans ce moyen d'identification. Lorsque l'on prévoit au moins deux éléments distincts pour le moyen d'identification, on peut concevoir que chaque élément distinct contienne l'identifiant complet du cycle ou bien une partie de l'identifiant, ou encore une combinaison des deux solutions précédentes.

Bien que le moyen d'identification d'un cycle puisse être réalisé de différentes manières, par exemple au moyen d'un code-barre ou d'un marquage spécifique, il est particulièrement avantageux, notamment pour minimiser les risques de fraude, de prévoir que le moyen d'identification d'un cycle comporte au moins un circuit intégré (puce électronique) comportant une mémoire contenant au moins une partie de l'identifiant du cycle. Dans ce cas, le dispositif de lecture correspondant comporte une interface-circuit apte à coopérer avec le circuit intégré. Dans un mode de réalisation simplifié, l'élément unique du moyen d'identification, ou bien les éléments distincts de ce dernier, peuvent ainsi comporter chacun une puce électronique noyée dans le cycle (antivol et/ou cadre, par exemple) reliée simplement à deux contacts métalliques extérieurs affleurant la surface du cycle et destinés à coopérer avec deux contacts homologues des moyens de lecture correspondants. Un tel mode de réalisation permet d'éviter d'utiliser, bien que cela soit possible, des moyens de lecture sans contact des puces électroniques, par exemple prévoyant une modulation par absorption d'ondes émises par les moyens de lecture.

Le système selon l'invention peut comprendre plusieurs stations de stockage, au moins deux, et les moyens de contrôle sont alors localisés au moins partiellement à l'extérieur des stations de stockage, en particulier en ce qui concerne les moyens de traitement et la mémoire centrale. Plus précisément, les moyens de contrôle peuvent comporter au sein de chaque station de stockage un terminal de liaison connecté à tous les dispositifs de verrouillage/déverrouillage, à tous les dispositifs de lecture des moyens d'identification des cycles reçus dans les emplacements de stockage et à tous les moyens d'interface de la station de stockage. Tous les terminaux de liaison sont alors connectés aux moyens de traitement et à la mémoire centrale. On réalise ainsi un suivi centralisé du fonctionnement du système permettant à un utilisateur d'emprunter un cycle à un emplacement de stockage d'une station de stockage et à le restituer soit à ce même emplacement, soit à un autre emplacement de la station de stockage, soit encore à une autre station de stockage.

Plus généralement, l'invention a encore pour objet un procédé de stockage automatisé de cycles comportant chacun un moyen d'identification contenant un identifiant associé de façon biunivoque audit cycle, et un antivol solidaire du cycle et agencé de façon à prévenir le vol du cycle lors d'une utilisation temporaire du cycle par un utilisateur. Cet antivol est actionnable à l'aide d'une clef amovible contenant au moins une partie du moyen d'identification. Selon ce procédé, on lit le contenu du moyen d'identification d'un cycle au niveau d'un emplacement de stockage d'au moins une station de stockage destinée à recevoir le cycle et on verrouille ou non automatiquement le cycle à cet emplacement de stockage en fonction du résultat de ladite lecture.

Lorsqu'on affecte des objets portatifs aux utilisateurs potentiels des cycles, chaque objet portatif comportant des informations d'identification identifiant au moins ledit objet portatif, on déverrouille avantageusement un cycle après avoir lu l'identifiant du cycle et les informations d'identification d'un objet portatif, et on verrouille un cycle après avoir contrôlé l'identifiant du cycle et les informations d'identification de l'objet portatif ayant permis son déverrouillage.

En variante, l'invention a également pour objet un procédé de stockage automatisé de cycles comportant chacun un moyen d'identification contenant un identifiant associé de façon biunivoque audit cycle. Selon ce procédé, on affecte des objets portatifs aux utilisateurs potentiels des cycles, chaque objet portatif comportant des informations d'identification identifiant au moins ledit objet portatif, on déverrouille un cycle après avoir lu l'identifiant du cycle et les informations d'identification d'un objet portatif, et en cas de déverrouillage du cycle, on interdit un déverrouillage ultérieur d'un cycle associé à ce même objet portatif tant que le cycle utilisé n'est pas de nouveau verrouillé à un emplacement de stockage, et, lors de la restitution d'un cycle à un emplacement de stockage, on contrôle au moins l'identifiant du cycle, et de préférence également les informations d'identification de l'objet portatif correspondant, on verrouille ou non le cycle en fonction du résultat de ce contrôle et on lève l'interdiction de déverrouillage associée à cet objet portatif.

L'invention a également pour objet un cycle comportant une zone d'accrochage pour son stockage temporaire, un moyen d'identification contenant un identifiant associé de façon biunivoque audit cycle, et un antivol solidaire du cycle et agencé de façon à prévenir le vol du cycle lors d'une utilisation temporaire du cycle par un utilisateur, cet antivol étant actionnable à l'aide d'une clef amovible contenant au moins une partie du moyen d'identification.

Un tel cycle peut également comporter avantageusement l'une au moins des caractéristiques de l'invention qui ont été évoquées précédemment.

D'autres avantages et caractéristiques de l'invention apparaîtront à l'examen de la description détaillée de modes de réalisation et de mise en oeuvre, nullement limitatifs, et des dessins annexés, sur lesquels :
la figure 1 est un synoptique très schématique d'un système de stockage de cycles selon l'invention;
la figure 2 illustre plus en détail une station de stockage de cycles,
les figures 3 à 6 illustrent schématiquement et plus en détail les caractéristiques d'un cycle ainsi que les moyens permettant son stockage automatique au sein d'une station de stockage,
la figure 7 illustre de façon schématique et plus en détail l'architecture générale d'une station de stockage,
la figure 8 est un synoptique schématique de l'architecture électronique d'un boîtier permettant notamment le verrouillage et le déverrouillage d'un cycle à un emplacement de stockage, et
la figure 9 est un synoptique schématique de l'architecture électronique d'un terminal de liaison d'une station de stockage.

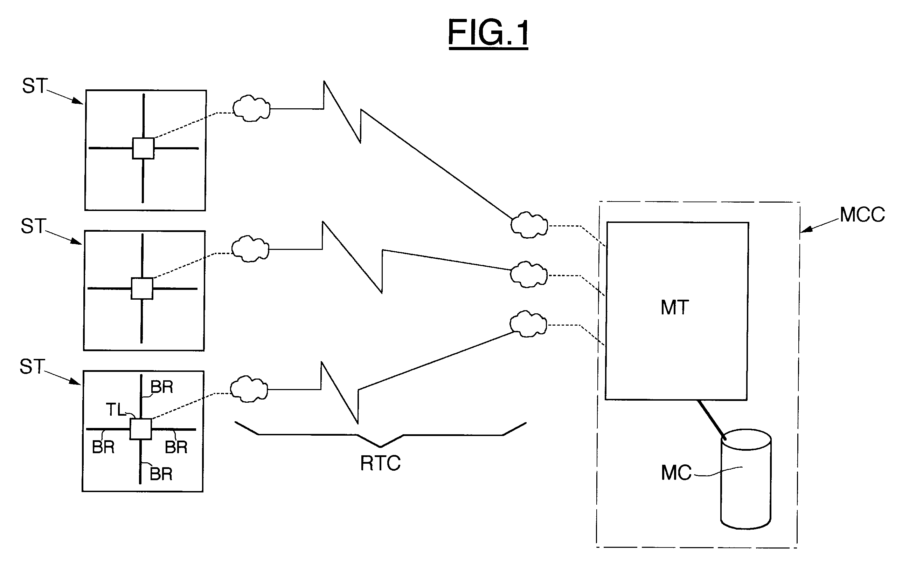

Tel qu'illustré sur la figure 1, le système comporte des moyens de contrôle centralisés MCC incorporant un ordinateur central logeant des moyens de traitement MT essentiellement réalisés sous forme logicielle et une mémoire centrale MC (fichier).

L'ordinateur MT est relié, par exemple au moyen d'un réseau téléphonique RTC à plusieurs stations de stockage ST dont seulement trois sont représentées sur cette figure à des fins de simplification. Comme on le verra plus en détail ci-après, les moyens de contrôle du système (également essentiellement réalisés de façon logicielle) comportent, de façon délocalisée au sein de chaque station de stockage, un terminal de liaison TL relié à l'ordinateur central MT. La station ST comporte par ailleurs des moyens permettant de recevoir des bicyclettes et représentés ici schématiquement dans cet exemple sous la forme de quatre barres BR.

Ces différentes stations de stockage peuvent être implantées au sein d'une même commune, de façon à permettre à des utilisateurs potentiels d'emprunter des cycles pour leurs déplacements occasionnels et/ou pour leurs loisirs et de les restituer au même endroit ou bien à des stations de stockage différentes.

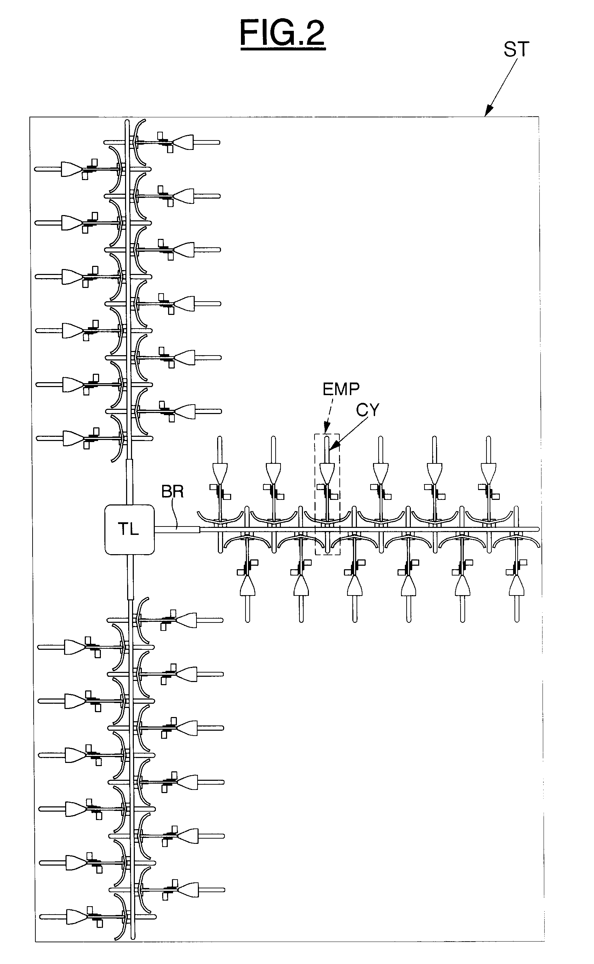

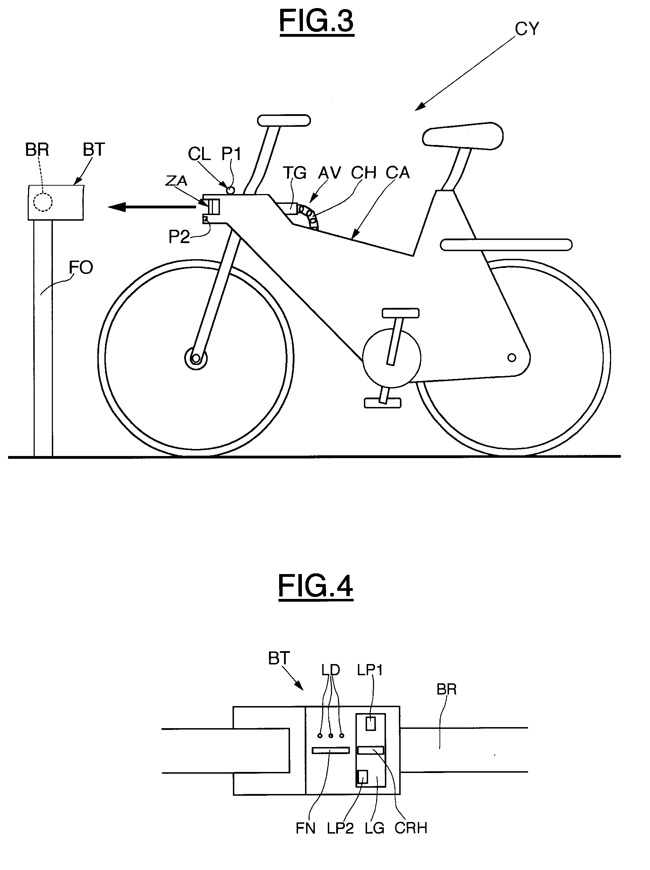

Matériellement, comme illustré notamment sur la figure 2, une station de stockage s'articule autour d'un bloc central contenant un terminal de liaison TL sur la structure et sur la fonction duquel on reviendra plus en détail ci-après, et d'où partent plusieurs barres BR de fixation des cycles CY. Sur chaque barre BY, sont prévus des moyens d'accrochage des cycles définissant pour le cycle un emplacement de stockage EMP. Ces moyens d'accrochage sont par exemple incorporés au sein d'un boîtier BT (figures 3 à 6) solidairement fixé d'une part sur la barre BR, et d'autre part sur le sol à l'aide de deux tiges verticales FO formant une fourche pour recevoir la roue avant du cycle et maintenir celui-ci vertical.

Une station de stockage occupant une surface rectangulaire de 7,5 mètres x 12,5 mètres, permet ainsi de stocker trente six bicyclettes réparties par exemple en douze bicyclettes par barre.

Comme illustré plus particulièrement sur les figures 3 à 6, un cycle CY comporte un cadre CA contenant un logement LGA, avantageusement inviolable, à l'intérieur duquel est solidairement fixé l'élément souple CH (ici une chaîne) d'un antivol AV du cycle. L'autre extrémité de la chaîne CH est raccordée à une tige TG venant s'emboîter dans la partie avant du cadre et pouvant être verrouillée et déverrouillée à l'aide d'une clef amovible CL. Ainsi, lorsqu'un utilisateur ayant emprunté un cycle souhaite le stationner momentanément de façon à éviter un vol, il déverrouille la tige TG de l'antivol AV à l'aide de la clef, extrait la partie de la chaîne située dans le logement LGA, fait passer cette chaîne autour d'un poteau par exemple, et reverrouille la tige TG de l'antivol dans la partie avant du cadre à l'aide de la clef.

L'extrémité avant du cadre CA du cycle CY comporte par ailleurs une zone d'accrochage ZA formée ici d'une tige s'étendant entre deux pattes horizontales, et destinée à venir coopérer avec un dispositif de verrouillage/déverrouillage disposé au niveau du boîtier BT. Plus précisément, ce dispositif de verrouillage/déverrouillage comporte un crochet CRH à commande électromagnétique logé dans un logement LG du boîtier BT et destiné à s'accrocher sur la tige de la zone d'accrochage ZA du cycle.

Afin d'identifier de façon biunivoque un cycle, il est prévu d'équiper ce dernier d'un moyen d'identification comportant ici deux éléments distincts formés de deux circuits intégrés (puces électroniques) P1 et P2, respectivement logés d'une part dans la clef CL de l'antivol et d'autre part dans le cadre, plus précisément au voisinage de la clef de l'antivol, par exemple au niveau de la zone d'accrochage ZA.

La mémoire de chacune des puces P1 et P2 contient un identifiant complet du cycle (numéro de série par exemple). Ces puces sont logées de façon invisible dans la clef et dans le cadre et sont simplement chacune reliées à deux contacts métalliques affleurant à l'extérieur de la clef et à l'extérieur du cadre de façon à pouvoir coopérer avec des contacts métalliques homologues de deux moyens de lecture LP1 et LP2, tous deux situés à l'intérieur du logement LG du boîtier BT.

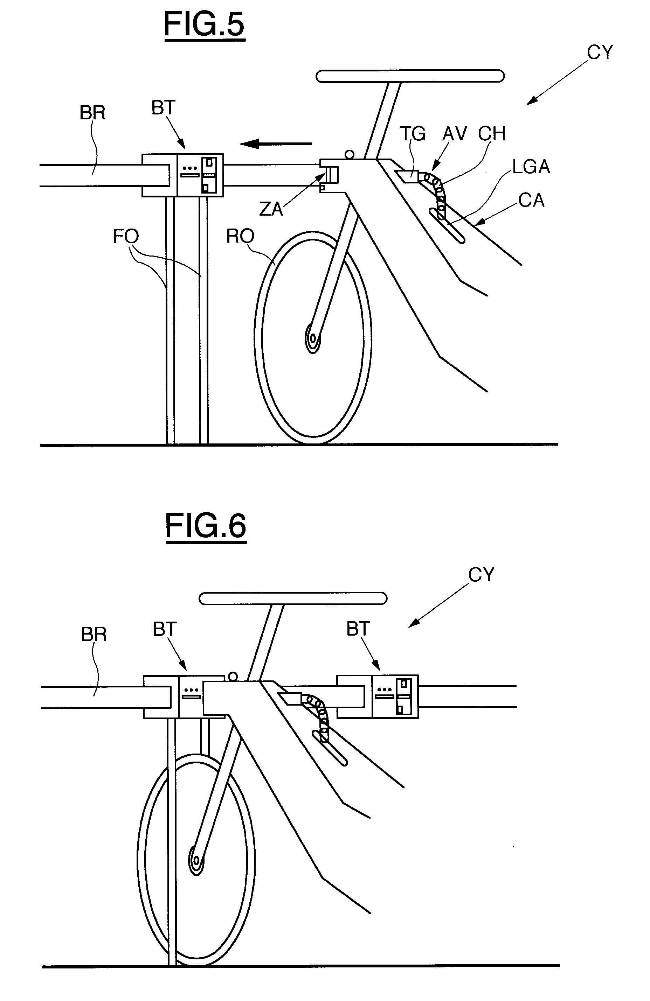

L'homme du métier remarquera, en particulier sur la figure 6, que lorsque le cycle est verrouillé dans le logement LG du boîtier, ce logement, et par conséquent les deux éléments constitutifs du moyen d'identification du cycle (clef CL et partie du cadre contenant la puce P2) sont inaccessibles pour un utilisateur sauf si bien entendu celui-ci déverrouille un cycle à l'aide, comme on le verra plus en détail ci-après, d'une carte à mémoire.

A cet égard, l'une des faces du boîtier comporte une fente FN apte à recevoir une telle carte à mémoire, ainsi que des diodes électroluminescentes LD destinées, comme on le verra ci-après, à indiquer visuellement l'utilisateur, au moyen de couleurs verte ou rouge, que le déverrouillage du cycle est autorisé ou interdit.

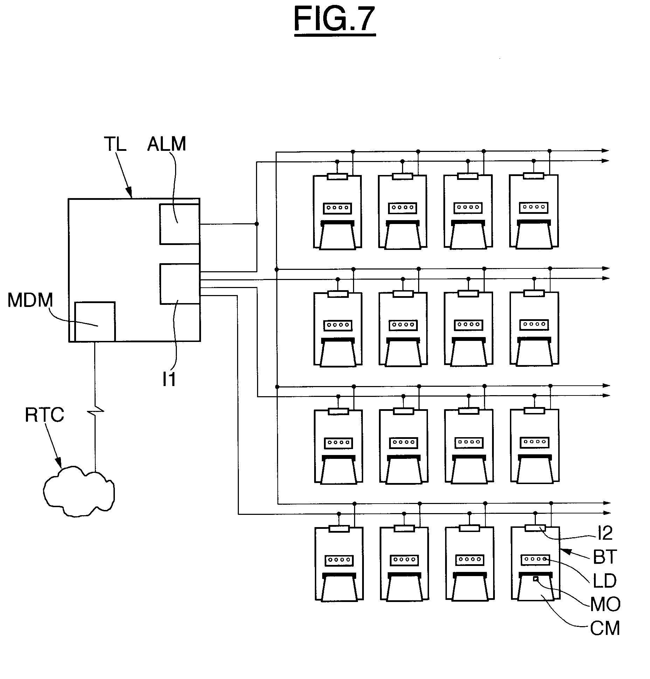

Sur la figure 7, on a essentiellement représenté schématiquement les boîtiers BT coopérant avec une carte à mémoire CM et reliés par l'intermédiaire d'une interface numérique I2 du type RS422 à une interface correspondante I1 du terminal de liaison TL de la station de stockage. De même, un bloc d'alimentation ALM du terminal de liaison alimente en courant continu les boîtiers BT.

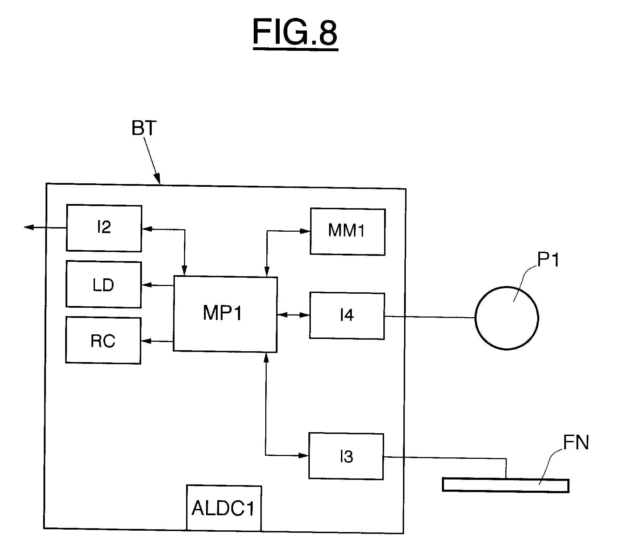

Pour pouvoir coopérer avec la mémoire MO de la carte à mémoire, par exemple une puce électronique, le boîtier incorpore un lecteur classique de carte à puce comportant notamment, comme illustré sur la figure 8, une interface spécifique I3 reliée à un microprocesseur 8 bits MP1.

La mémoire MO de la carte comporte des informations d'identification incluant notamment un identifiant de la carte, mais aussi de préférence, un identifiant de l'utilisateur à qui a été affectée cette carte, ainsi qu'éventuellement des informations indiquant une durée limite d'utilisation de cette carte par l'utilisateur. En fait, les informations d'identification, autres que l'identifiant de la carte proprement dit, pourraient être uniquement stockées directement au niveau du fichier central MC de l'ordinateur central, en correspondance avec l'identifiant de la carte également stocké dans ce fichier.

L'architecture électronique interne du boîtier BT est, comme illustré sur la figure 8, articulée autour du microprocesseur 8 bits MP1. A ce microprocesseur MP1 est reliée l'interface I2 du type RS422, les diodes électroluminescentes LD, ainsi que des relais de commande RC permettant d'activer les crochets électromagnétiques de verrouillage des cycles.

Le lecteur des puces (P1 par exemple) d'identification du cycle est partiellement réalisé de façon logicielle au sein du microprocesseur MP1, et incorpore également l'interface I4 destinée à coopérer avec les contacts métalliques de la puce correspondante, cette interface I4 étant reliée au microprocesseur MP1.

Enfin, de façon classique, est associé à ce microprocesseur MP1 un bloc mémoire MM1 contenant par exemple 32 Koctets de mémoire vive et 128 Koctets de mémoire non volatile. Un bloc d'alimentation ALDC1 permet de fournir les différentes tensions d'alimentation pour les différents composants de ce boîtier BT.

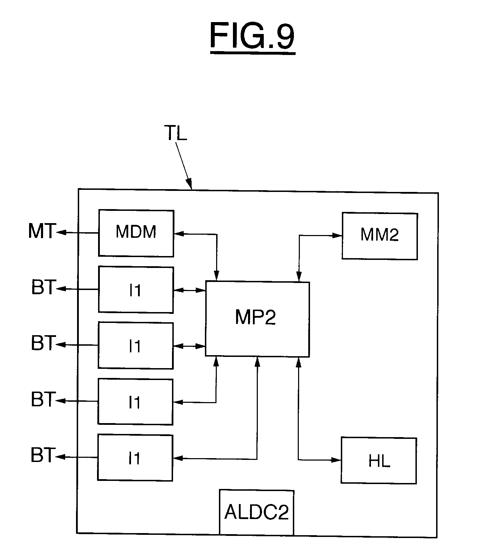

L'architecture électronique interne du termina! de liaison TL est, comme illustré sur la figure 9, architecturée autour d'un microprocesseur MP2 32 bits relié à un Modem MDM lui-même relié, par l'intermédiaire du réseau téléphonique commuté RTC à l'ordinateur central MT. Toutes les interfaces I1 du type RS422, respectivement connectées à des groupes de boîtiers, sont également reliées au microprocesseur MP2. Il est également prévu une horloge HL indiquant l'heure courante, ainsi qu'un bloc d'alimentation ALDC2 délivrant les différentes tensions d'alimentation aux différents composants du terminal TL. Enfin, un bloc mémoire MM2 est classiquement associé au microprocesseur MP2 et comporte notamment 1 Moctet de mémoire vive dynamique, 128 Koctets de mémoire vive et 128 Koctets de mémoire morte.

On va maintenant décrire plus en détail le fonctionnement du système selon l'invention.

Lorsqu'un utilisateur souhaite pouvoir utiliser le système de stockage de cycles selon l'invention, on lui affecte une carte à mémoire CM. Les moyens de traitement de l'ordinateur central identifient alors cet utilisateur potentiel à l'aide d'un identifiant-utilisateur qui est stocké dans le fichier central MC en correspondance de l'identifiant-carte de la carte à mémoire qui lui a été attribuée. Cet identifiant-utilisateur peut être également directement stocké dans la mémoire MO de la carte à mémoire. Il est également possible d'associer à cet utilisateur et a cette carte, des informations de validité indiquant par exemple une date limite d'utilisation de la carte. Ces informations de validité sont stockées dans le fichier central en correspondance de l'identifiant-carte et de l'identifiant-utilisateur, mais peuvent l'être également dans la mémoire MO de la carte à mémoire.

Le fichier central MC des moyens de contrôle contient également tous les identifiants des cycles.

Lorsque cet utilisateur envisage d'emprunter un cycle, il se présente dans une station de stockage et introduit sa carte à mémoire dans le boîtier BT. A ce moment-là, l'identifiant du cycle correspondant, ainsi que les informations d'identification de la carte sont transférés via les moyens correspondants du boîtier, et le terminal de liaison, à l'ordinateur central MT qui, si rien ne s'y oppose, comme on le verra plus en détail ci-après, délivre une autorisation de déverrouillage du cycle qui se traduit par l'émission d'un signal de commande au niveau des relais des crochets électromagnétiques du boîtier. Une lumière verte s'allume alors sur le boîtier, le cycle est déverrouillé et l'utilisateur peut s'en servir. L'heure de déverrouillage est également stockée dans le fichier central.

Parallèlement à cette autorisation de déverrouillage fournie par les moyens de contrôle, ceux-ci vont alors interdire le déverrouillage ultérieur d'un cycle à l'aide de cette même carte à mémoire, tant que le cycle précédent n'a pas été restitué. Pour ce faire, les moyens de contrôle peuvent par exemple créer, au sein du fichier central, une table de correspondance entre l'identifiant de la carte à mémoire ayant permis le déverrouillage du cycle et l'identifiant du cycle ainsi déverrouillé. Tant que le cycle ne sera pas restitué à un emplacement de stockage quelconque d'une station de stockage quelconque, l'identifiant de la carte figurera dans cette table de correspondance et ne pourra pas donner lieu à un déverrouillage ultérieur du cycle.

Lorsque l'utilisateur restitue à son cycle un emplacement de stockage quelconque d'une station de stockage quelconque, il positionne la zone d'accrochage ZA de son cycle dans le logement LG du boîtier correspondant et introduit sa carte à mémoire dans la fente du lecteur correspondant. Le boîtier BT et le terminal de liaison TL transmettent alors à l'ordinateur central l'identifiant du cycle restitué, ainsi que les informations d'identification de la carte à mémoire. L'ordinateur central vérifie alors, d'une part que le cycle a bien été rendu dans son intégralité (antivol + cadre) et vérifie également que l'identifiant du cycle restitué correspond bien à l'identifiant de la carte ayant permis son déverrouillge. Si tel est le cas, une instruction de verrouillage est alors transmise au boîtier qui verrouille automatiquement le cycle. Simultanément, l'identifiant de la carte à mémoire est effacé de la table de correspondance, ce qui a pour conséquence d'autoriser à nouveau le déverrouillage d'un autre cycle à partir de cette carte à mémoire. L'heure de verrouillage est également enregistrée.

Ceci étant, l'ordinateur central peut interdire le déverrouillage d'un cycle pour une autre raison. En effet, un tel cycle peut par exemple avoir été réservé par un utilisateur spécifique, ou bien certains des cycles peuvent nécessiter une maintenance légère telle que le remplacement d'une chaîne ou le remplacement d'un pneu, ou encore certaines cartes à mémoires peuvent avoir été volées.

Dans ce cas, il est avantageusement prévu que les boîtiers BT soient également affectés d'un identifiant-boîtier, par exemple mémorisé dans la mémoire associée au microprocesseur MP1. Tous les identifiants de boîtiers sont également mémorisés dans le fichier central MC de l'ordinateur central. Comme tous les identifiants de cycles sont également stockés dans le fichier central et que l'ordinateur central connaît en permanence les identifiants des cycles verrouillés, on peut établir très facilement de façon logicielle une correspondance entre certains des cycles qui ne doivent pas être déverrouillés, et les boîtiers BT correspondants.

## Revendications

1. Système automatisé de stockage de cycles, comprenant :
une pluralité de cycles (CY) comportant chacun une zone d'accrochage (ZA) pour son stockage temporaire, un moyen d'identification (P1, P2) contenant un identifiant associé de façon biunivoque audit cycle, et un antivol (AV) solidaire du cycle et agencé de façon à prévenir le vol du cycle lors d'une utilisation temporaire du cycle par un utilisateur, cet antivol étant actionnable à l'aide d'une clé amovible (CL) contenant au moins une partie du moyen d'identification (P1), et
au moins une station de stockage (ST) comprenant plusieurs emplacements de stockage (EMP) aptes chacun à recevoir de façon amovible un cycle, plusieurs dispositifs commandables de verrouillage/déverrouillage automatique de cycles (CRH) aptes chacun à coopérer avec ladite zone d'accrochage d'un cycle, et des dispositifs de lecture (LP1, LP2) aptes à lire les moyens d'identification des cycles reçus dans les emplacements de stockage.

2. Système selon la revendication 1, caractérisé par le fait qu'il comprend une pluralité d'objets portatifs (CM) destinés à être affectés à des utilisateurs potentiels des cycles, et contenant chacun des informations d'identification permettant au moins d'identifier ledit objet portatif, par le fait que les dispositifs de verrouillage/déverrouillage sont aptes chacun à verrouiller un cycle à son emplacement de stockage et à déverrouiller un cycle en réponse à des signaux de commande de verrouillage et de déverrouillage, par le fait que la station (ST) comprend en outre des moyens d'interface (I3, FN) aptes chacun à coopérer avec un objet portatif, et par le fait que le système comprend des moyens de contrôle (TL, MC) reliés aux dispositifs de lecture, aux dispositifs de verrouillage/déverrouillage et aux moyens d'interface, et aptes en présence d'un objet portatif coopérant avec un moyen d'interface, à contrôler les informations d'identification de l'objet portatif et l'identifiant du cycle de façon à éventuellement délivrer le signal de commande de déverrouillage correspondant, et aptes, lors de la restitution d'un cycle à un emplacement de stockage, à contrôler l'identifiant du cycle de façon à éventuellement délivrer le signal de commande de verrouillage.

3. Système automatisé de stockage de cycles, comprenant :
une pluralité de cycles (CY) comportant chacun un moyen d'identification (P1, P2) contenant un identifiant associé de façon biunivoque audit cycle,
une pluralité d'objets portatifs (CM) destinés à être affectés à des utilisateurs potentiels des cycles, et contenant chacun des informations d'identification permettant au moins d'identifier ledit objet portatif,
au moins une station de stockage (ST) comportant plusieurs emplacements de stockage (EMP) aptes chacun à recevoir de façon amovible un cycle, des dispositifs de lecture des moyens d'identification des cycles reçus dans les emplacements de stockage, des dispositifs de verrouillage/déverrouillage automatique aptes chacun à verrouiller un cycle à son emplacement de stockage et à déverrouiller un cycle en réponse à des signaux de commande de verrouillage et de déverrouillage, et des moyens d'interface aptes chacun à coopérer avec un objet portatif, et
des moyens de contrôle (MT, TL) reliés aux dispositifs de lecture, aux dispositifs de verrouillage/déverrouillage et aux moyens d'interface, et aptes en présence d'un objet portatif coopérant avec un moyen d'interface, à contrôler les informations d'identification de l'objet portatif et l'identifiant du cycle de façon à éventuellement délivrer le signal de commande de déverrouillage correspondant, et en cas de délivrance du signal de commande de déverrouillage à inhiber la délivrance d'un signal de commande de déverrouillage ultérieur associé à ce même objet portatif tant que le cycle utilisé n'est pas de nouveau reçu dans un emplacement de stockage, et aptes, lors de la restitution d'un cycle à un emplacement de stockage, à contrôler au moins l'identifiant du cycle, à délivrer le signal de commande de verrouillage et à lever l'inhibition de délivrance d'un signal de commande de déverrouillage associé à cet objet portatif.

4. Système selon la revendication 3, caractérisé par le fait que chaque cycle (CY) est équipé d'un antivol (AV) solidaire du cycle et agencé de façon à prévenir le vol du cycle lors d'une utilisation temporaire du cycle par un utilisateur, cet antivol étant actionnable à l'aide d'une clé amovible (CL) contenant au moins une partie du moyen d'identification (P1).

5. Système selon l'une des revendications 2 à 4, caractérisé par le fait que les moyens de contrôle comportent une mémoire centrale (MC) contenant tous les identifiants de cycles, toutes les informations d'identification des objets portatifs, et par le fait que les moyens de contrôle comportent des moyens de traitement (MT) aptes à élaborer une table de correspondance entre chaque identifiant de cycle déverrouillé et les informations d'identification de l'objet portatif ayant permis le déverrouillage, à inhiber la délivrance d'un signal de commande de déverrouillage ultérieur associé à ce même objet portatif tant que les informations d'identification de cet objet portatif figurent dans ladite table de correspondance, et à lever ladite inhibition de délivrance d'un signal de commande de déverrouillage associé à cet objet portatif en retirant de ladite table de correspondance les informations d'identification de cet objet portatif.

6. Système selon la revendication 5, caractérisé par le fait que les moyens de traitement (MT) sont aptes à inhiber la délivrance d'un signal de commande de déverrouillage en présence d'une condition supplémentaire autre que celle liée au contenu de ladite table de correspondance.

7. Système selon l'une des revendications 2 à 6, caractérisé par le fait que la station de stockage (ST) comporte des boîtiers (BT) respectivement associés aux emplacements de stockage, chaque boîtier incorporant un logement (LG) inacessible à un utilisateur, apte à recevoir au moins partiellement le moyen d'identification d'un cycle, un dispositif de lecture du moyen d'identification du cycle, un moyen de verrouillage/déverrouillage, et un moyen d'interface avec un objet portatif.

8. Système selon l'une des revendications 2 à 7, caractérisé par le fait que chaque objet portatif est une carte à mémoire (CM) et par le fait que chaque moyen d'interface comporte un lecteur de carte à mémoire.

9. Système selon la revendication 1 ou 2 ou l'une des revendications 4 à 8, caractérisé par le fait que l'antivol comporte un élément souple (CH) dont l'une des extrémités est solidairement fixée sur une partie du cycle et dont l'autre extrémité (TG) est fixée de façon amovible sur une autre partie du cycle à l'aide de la clé.

10. Système selon l'une des revendications précédentes, caractérisé par le fait que le moyen d'identification d'un cycle comporte deux éléments distincts (P1, P2) respectivement disposés à deux endroits distincts du cycles, et chaque élément contenant au moins une partie de l'identifiant du cycle.

11. Système selon la revendication 10 prise en combinaison avec la revendication 1, 4 ou 9, caractérisé par le fait que le premier élément (P1) du moyen d'identification est logé dans la clé (CL) de l'antivol et le deuxième élément (P2) du moyen d'identification est logé dans le cadre du cycle.

12. Système selon la revendication 10 ou 11 prise en combinaison avec la revendication 7, caractérisé par le fait que les deux éléments distincts du moyen d'identification d'un cycle sont disposés sur le cycle de façon à être reçus tous les deux dans le logement inacessible (LG) du boîtier (BT), le dispositif de lecture du boîtier comportant deux moyens de lecture (LP1, LP2) aptes à coopérer respectivement avec les deux éléments distincts du moyen d'identification.

13. Système selon l'une des revendications précédentes, caractérisé par le fait que le moyen d'identification du cycle comporte au moins un circuit intégré comportant une mémoire contenant au moins une partie de l'identifiant du cycle, et par le fait que le dispositif de lecture correspondant comporte une interface-circuit (I3) apte à coopérer avec le circuit intégré.

14. Système selon l'une des revendications précédentes, caractérisé par le fait qu'il comprend plusieurs stations de stockage (ST), et par le fait que les moyens de traitement et la mémoire centrale des moyens de contrôle sont localisés au moins partiellement à l'extérieur des stations de stockage.

15. Système selon la revendication 14, caractérisé par le fait que les moyens de contrôle comportent au sein de chaque station de stockage, un terminal de liaison (TL) connecté à tous les dispositifs de verrouillage/déverrouillage, à tous les dispositifs de lecture des moyens d'identification des cycles reçus dans les emplacements de stockage, et à tous les moyens d'interface de la station de stockage, et par le fait que tous les terminaux de liaison sont connectés aux moyens de traitement et à la mémoire centrale.

16. Procédé de stockage automatisé de cycles comportant chacun un moyen d'identification contenant un identifiant associé de façon biunivoque audit cycle (CY), et un antivol (AV) solidaire du cycle et agencé de façon à prévenir le vol du cycle lors d'une utilisation temporaire du cycle par un utilisateur, cet antivol étant actionnable à l'aide d'une clé amovible (CL) contenant au moins une partie (P1) du moyen d'identification, procédé dans lequel on lit le contenu du moyen d'identification d'un cycle (CY) au niveau d'un emplacement de stockage (EMP) d'au moins une station de stockage (ST) destiné à recevoir le cycle et on verrouille ou non automatiquement le cycle à cet emplacement de stockage en fonction du résultat de ladite lecture.

17. Procédé selon la revendication 16, caractérisé par le fait qu'on affecte des objets portatifs (CM) aux utilisateurs potentiels des cycles, chaque objet portatif comportant des informations d'identification identifiant au moins ledit objet portatif, on déverrouille un cycle (CY) après avoir lu l'identifiant du cycle et les informations d'identification d'un objet portatif, et on verrouille un cycle après avoir contrôlé l'identifiant du cycle et les informations d'identification de l'objet portatif ayant permis son déverrouillage.

18. Procédé de stockage automatisé de cycles comportant chacun un moyen d'identification contenant un identifiant associé de façon biunivoque audit cycle (CY), dans lequel on affecte des objets portatifs (CM) aux utilisateurs potentiels des cycles, chaque objet portatif comportant des informations d'identification identifiant au moins ledit objet portatif, on déverrouille un cycle après avoir lu l'identifiant du cycle et les informations d'identification d'un objet portatif, et en cas de déverrouillage du cycle, on interdit un déverrouillage ultérieur d'un cycle associé à ce même objet portatif tant que le cycle utilisé n'est pas de nouveau verrouillé à un emplacement de stockage (EMP), et, lors de la restitution d'un cycle à un emplacement de stockage, on contrôle au moins l'identifiant du cycle, on verrouille ou non le cycle en fonction du résultat de ce contrôle et on lève l'interdiction de déverrouillage associé à cet objet portatif.

19. Cycle comportant une zone d'accrochage (ZA) pour un stockage temporaire du cycle, un moyen d'identification (P1, P2) contenant un identifiant associé de façon biunivoque audit cycle, et un antivol (AV) solidaire du cycle et agencé de façon à prévenir le vol du cycle lors d'une utilisation temporaire du cycle par un utilisateur, cet antivol étant actionnable à l'aide d'une clé amovible (CL) contenant au moins une partie (P1) du moyen d'identification.
